# EUROPEAN PATENT APPLICATION

(11) **EP 2 511 520 A1**
(43) Date of publication of application: **17.10.2012**
(21) Application number: 10835517.3
(22) Date of filing: 10.12.2010
(51) Int. Cl.: F03D 1/00, F03D 1/06, F03D 11/04

(54) **EQUIPMENT AND METHOD FOR INSTALLING THE THIRD BLADE OF A WIND TURBINE**

(30) Priority: 11.12.2009 ES 200902312
(71) Applicant: Grupo De Ingenieria Aceanica, S.L., 38390 - Santa Ursula, Tenerife - Islas Canarias (ES)
(72) Inventor: DEL CAMPO Y RUIZ DE ALMODOVAR, Cesar, 11500 El Puerto de Santa Maria (Cádiz) (ES)
(74) Representative: Garcia-Cabrerizo y del Santo, Pedro Maria
(86) International application number: PCT/ES2010/000505
(87) International publication number: WO 2011/070194

(57) **Abstract**

Device and method for installing the third blade (2) of a wind turbine (5), said wind turbine being placed on a platform (4) located on a water surface, so that the device is moved on the platform and along with it towards the final location. The device is moved, through tracks (3), on the platform surface until facing the third blade (2) with its corresponding hole of wind turbine. The blade, vertically held by jaws and legs (1), is lifted, fitted and screwed.

## Description

### Technical field of the invention

The present invention relates to a device and method for installing the third blade of a wind turbine resting on a platform located on a water surface. However, both the device and the method can be applied in the installation of all wind turbine blades if needed.

### Background of the Invention

Currently, systems for installing the third blade of a wind turbine located on the sea surface involves the use of ships moving the blade to the wind turbine location, the use of floating cranes and a huge array of media make the installation of the blade an expensive and complicated method, besides being subjected to suitable weather conditions, since the weather must be gentle, the sea must be calm, and so on. On the other hand, huge dimensions of an each blade make the process even more complicated and difficult, which often requires several days, even weeks until its full completion.

Therefore, the present invention provides a device and method for placing the third blade of a wind turbine located on a platform above the water surface in a simple manner, without environmental impact and with economically competitive prices. Furthermore, the installation can be carried out regardless of weather and climate conditions.

### Description of the invention

The device for placing the third blade, object of the present invention, is moved on the platform and along with it towards the final location thereof. On the platform the wind turbine with two blades has been previously installed.

Normally, when installing a wind turbine on a platform final location of which will be a water surface, the wind turbine is mounted with only two of its three blades in order to avoid that the center of gravity of the assembly is too high and loses stability during transport.

The fact that the device for placing the third blade is moved on the platform is moved towards its final location on the water surface involves a great advantage because no additional resources are needed for transporting and placing thereof.

The device in question includes some tracks bolted to the platform, which allow displacing the device on the platform surface. It also includes a structure for supporting the legs and an element for lifting the blade such as a rack-pinion or a hydraulic piston.

Once placed in its final location, the wind turbine must be lifted to a height such that the lower level of the third blade hole is above the height of the blade. In this situation, the device moves through the tracks until the blade is located just below the hole wherein it will be placed. For this purpose, there is a laser transmitter-receiver system indicating wherein the blade must be precisely placed so it can be fitted into its hole. The blade is lifted, fitted into the corresponding hole and screwed. Once screwed, the blade is already attached to the wind turbine, whereby jaws holding it are opened, and the device is removed moving along the tracks.

This device can be used for installing two or all the blades if needed. It would be enough to have a double or triple clamp so as to hold two or three blades. Following the same described method the three blades can be placed by simply rotating the rotor of the wind turbine in order to face each blade with a corresponding hole.

### Description of the figures:

In order to complete the description being made and for helping to a better understanding of the features of the invention a set of drawings is accompanied, wherein in an illustrative and not limitative manner, the following has been represented:

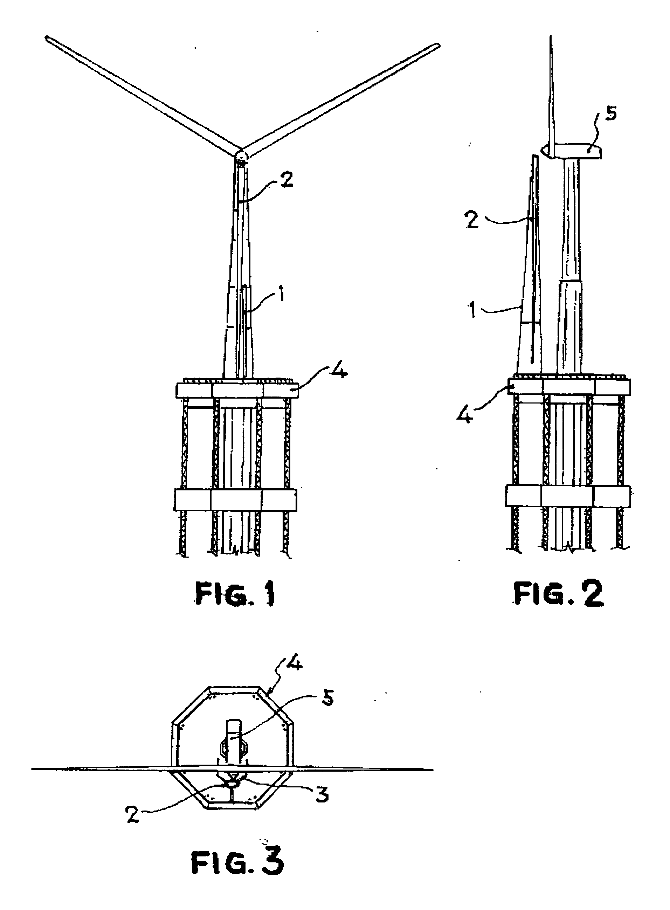

Figure 1: Elevational front view of a platform on which there is a wind turbine and device for mounting the third blade.
Figure 2: Side view of Figure 1.
Figure 3: Plan view of Figure 1.

In said figures, different references appearing thereof have the following meanings:
1 .- Legs of the device for placing the third blade.
2 .- Third blade
3.- Displacement tracks
4 .- Platform
5.- Wind turbine

### Detailed description of the invention

In order to achieve a better understanding of the invention, the device and method for installing the third blade of a wind turbine is going to be described, with the help of the figures.

The device for placing or installing the third blade (2) of wind turbine (5), located on a platform (4) moves over the surface thereof towards it final location at sea, ocean....

The device, which is moved inside the very platform surface through some tracks (3), includes in addition to these tracks (3), a structure with three legs (1) with the shape of a tripod, and a jaw or clamp, vertically holding the blade (2) and a rack-pinion which allows the upward movement of the blade (2).

Once in the final location, the wind turbine (5) is lifted on the platform (4) to a sufficient height, that is, that the lower level of the hole of the third blade (2) is above the height of said blade. The device for installing the third blade is moved along the tracks (3) until positioning bellow the hole of the wind turbine corresponding to the third blade (2). A laser transmitter-receiver system will indicate the position wherein the blade is exactly bellow the hole wherein it will be fitted. By using the motor, the device is lifted until the blade is inserted into its hole and, once fitted there is screwed.

By already being the third blade connected to the wind turbine, the jaw holding it is opened, and the device is removed by displacing along the tracks.

The whole device, including tracks, is recovered for another installation.

## Claims

1. Device for installing the third blade (2) of a wind turbine (5), said wind turbine being placed on a platform (4) located on a water surface **characterized in that** said device moves on the platform (4), and along with it, towards finally positioning thereof, and comprising the following elements:
- Displacement tracks (3) screwed into the platform (4).
- At least one blade (2) of the wind turbine (5).
- A structure for supporting the blade (2) of the wind turbine (5).
- An element for lifting the blade.

2. Device for installing the third blade of a wind turbine, according to claim 1, **characterized in that** structure for supporting the blade (2) of the wind turbine (5) is formed by three supporting legs (1) with the shape of a tripod and at least one jaw.

3. Device for installing the third blade of a wind turbine, according to claim 2, **characterized in that** it includes two or three jaws for carrying two or three blades respectively.

4. Device for installing the third blade of a wind turbine, according to claim 1, **characterized in that** the element for lifting the blade is a rack-pinion.

5. Device for installing the third blade of a wind turbine, according to claim 1, **characterized in that** the element for lifting the blade is a hydraulic pinion.

6. Device for installing the third blade of a wind turbine, according to claim 1, **characterized in that** it includes a laser transmitter-receiver for indicating the position wherein the blade (2) must be positioned for being fitted into its corresponding hole.

7. Method for installing the third blade making use of the device of claim 1, **characterized by** the following steps:
- The wind turbine (5) is lifted to a height such as the lower level of the hole for the third blade (2) located in the wind turbine (5) is above the height of the blade.
- The installation device is moved through the tracks (3) until the blade (2) is properly positioned in the corresponding hole of the wind turbine to be fitted therein.
- The blade (2) is lifted until fitting it into its hole.
- Said blade is screwed to the rotor.
- The jaw initially holding the blade (2) is released.
- The device is removed moving it through the tracks to take it out from the platform.

8. Method for installing the third blade according to claim 7, **characterized in that** a laser transmitter-receiver system is used for indicating the position wherein the blade (2) must be placed to be fitted into its corresponding hole.

## Amended claims

### Amended claims under Art. 19.1 PCT

**1.** Device for installing the third blade (2) of a wind turbine (5), said wind turbine being placed on a platform (4) located on a water surface **characterized in that** said device moves on the platform (4), and along with it, towards finally positioning thereof, and comprising the following elements:
- displacement tracks (3) screwed into the platform (4).
- at least one blade (2) of the wind turbine (5).
- a structure for supporting the blade (2) of the wind turbine (5) consisting of three supporting legs (1) with the shape of a tripod and at least one jaw that hold the blade (2) in vertical position.
- an element for lifting the blade.
- a laser transmitter-receiver for indicating the position wherein the blade (2) must be positioned for being fitted into its corresponding hole.

**2.** Device for installing the third blade of a wind turbine, according to claim 1, **characterized in that** it includes two or three jaws for carrying two or three blades respectively.

**3.** Device for installing the third blade of a wind turbine, according to claim 1, **characterized in that** the element for lifting the blade is a rack-pinion.

**4.** Device for installing the third blade of a wind turbine, according to claim 1, **characterized in that** the element for lifting the blade is a hydraulic pinion.

**5.** Method for installing the third blade making use of the device of claim 1, **characterized by** the following steps:
- The wind turbine (5) is lifted to a height such as the lower level of the hole for the third blade (2) located in the wind turbine (5) is above the height of the blade.
- The installation device is moved through the tracks (3) until the blade (2) is properly positioned in the corresponding hole of the wind turbine to be fitted therein, using a laser transmitter-receiver for indicating the position wherein the blade (2) must be positioned for being fitted into its corresponding hole
- The blade (2) is lifted until fitting it into its hole.
- Said blade is screwed to the rotor.
- The jaw initially holding the blade (2) is released.
- The device is removed moving it through the tracks to take it out from the platform.

Statement under Art. 19.1 PCT
The following amendments have been made to the claims:
● The characteristics of initial claims 2 and 6 have been included in claim 1.
● Consequently, initial claims 2 and 6 have been removed.
● In claim 1 the characteristic that the blade is vertically held by the supporting structure has been introduced, as indicated in the description, page 3, line 11, and in figures 1-3.
● The characteristics in initial claim 8 have been included in claim 7 (current claim 5).
● Consequently, initial claim 8 has been removed.
